# FASCICULE DE BREVET EUROPEEN

(11) **EP 0 893 706 B1**
(45) Date de publication et mention de la délivrance du brevet: **05.11.2003**
(21) Numéro de dépôt: 98401772.3
(22) Date de dépôt: 13.07.1998
(51) Int. Cl.: G01V 1/22

(54) **Méthode et système de transmission de données sismiques à une station de collecte éloignée**
Verfahren und system zur Übertragung von seismischen Daten zu einer entfernten zentralen Station
Method and system for transmission of seismic data to a remote central recording station

(30) Priorité: 24.07.1997 FR 9709547
(43) Date de publication de la demande: 27.01.1999
(73) Titulaire: Institut Français du Pétrole, 92852 Rueil-Malmaison Cedex (FR)
(72) Inventeur: Grouffal, Christian, 92500 Rueil-Malmaison (FR); Bary, Renate, 92500 Rueil-Malmaison (FR); Thierry, Gérard, 92000 Nanterre (FR)

(56) Documents cités:
- EP-A- 0 277 067
- WO-A-97/13164
- DE-A- 19 519 164
- FR-A- 2 608 780
- US-A- 3 062 315
- US-A- 3 555 502
- US-A- 4 862 167

## Description

La présente invention concerne une méthode et un système de transmission (notamment par voie hertzienne), de données à une station éloignée, permettant conduire le rapatriement de données acquises par un équipement de collecte de données comprenant un nombre très important de stations locales de collecte. La méthode utilise de préférence des techniques de compression en vue d'optimiser l'utilisation de voies de transmission disponibles.

La méthode selon l'invention trouve des applications notamment dans le domaine de l'exploration sismique où il est nécessaire de transférer vers une station centrale telle qu'un camion-laboratoire, une masse souvent considérable de données. Des signaux sont captés par un très grand nombre de récepteurs tels que des géophones couplés avec une formation géologique à étudier, en réponse à des ébranlements émis par une source sismique et renvoyés par les discontinuités du sous-sol. Les signaux captés sont collectés par des unités locales d'acquisition réparties parfois sur une distance de plusieurs km ou des surfaces de plusieurs km carré, et destinées chacune à collecter les signaux reçus par un ou plusieurs récepteurs, à les numériser, à leur appliquer des traitements préalables plus ou moins complexes et les stocker dans une mémoire locale avant leur transmission en temps réel ou différé à une station de collecte par une voie de transmission telle qu'un câble, une fibre optique, un canal radio etc.

### ETAT DE LA TECHNIQUE

Différents systèmes de transmission de données sismiques sont utilisés pour relier des unités locales d'acquisition à une station central soit directement, soit via des stations intermédiaires pourvues de fonctions plus ou moins complexes de concentration ou de contrôle des unités locales. Les liaisons peuvent être assurées au moyen de câbles, de liaisons radio, via un ou plusieurs relais éventuels, ou encore combiner les liaisons par câbles et par liaison radio comme indiqué par exemple dans les brevets FR 2.720.518, EP 0.594.477, EP 0.275.781, US 4.815.044, US 4.979.152, US 4.583.206 ou US 4.908.803 du demandeur.

Par le brevet EP 0.275.781 du demandeur notamment, il est connu d'utiliser des boîtiers d'acquisition sismique dotés de deux voies de transmission, l'une à débit de transmission relativement élevé, l'autre à bande passante qui peut être relativement étroite selon la disponibilité locale des fréquences de transmission, plus facilement disponibles dans le cadre des réglementations d'émission radioélectriques en vigueur. Les données sismiques collectées au cours des cycles successifs sont stockées sur une mémoire de masse dans chacun des boîtiers et transférées par intermittence à une station centrale de commande et d'enregistrement. Pour permettre à l'opérateur dans la station centrale de vérifier que l'acquisition des données par chacun des boîtiers d'acquisition se déroule normalement, on procède à une transmission des données partielles ce qui s'accommode bien d'une voie de transmission à bande passante relativement étroite.

Par le brevet FR 2.692.384 (US 5.550.787) du demandeur également, il est connu d'utiliser des boîtiers d'acquisition sismique pourvus notamment de moyens de traitement spécialisés dans le traitement des signaux auxquels on fait réaliser de nombreux contrôles des géophones et éléments de la chaîne d'acquisition ainsi que des pré-traitements des traces sismiques auparavant réalisés à la station centrale après transmission, permettant donc de diminuer considérablement le volume de données à rapatrier.

La tendance actuelle, notamment dans le cadre des méthodes d'exploration sismique dites 3D, est à répartir sur une zone à explorer, à terre, en mer, ou dans des zones côtières, souvent sur plusieurs km carré des récepteurs sismiques par centaines, voire par milliers. Le volume des données à collecter et à transmettre ne cesse de croître. Pour éviter que les problèmes de transmission ne constituent un frein à l'évolution des systèmes sismiques la tendance est de recourir à des procédés de compression de données choisis pour être compatibles avec les exigences propres des géophysiciens.

Si l'on considère par exemple le problème du rapatriement en temps réel à une station centrale de 1000 "traces" sismiques échantillonnées chacune toutes les 2 ms durant un cycle d'enregistrement n, on se trouve dans l'obligation de transmettre pendant le déroulement du cycle suivant n+1, un débit global brut de 14,4 Mbits/s (si l'on tient compte des bits de correction et de détection d'erreurs) à répartir dans 36 canaux hertziens. Si l'on utilise à cet effet un système de modulation du type TFM qui autorise un débit de transmission de 400Kbits/s dans une bande passante de 500 kHz, une bande passante globale de 18 MHz est nécessaire. C'est une condition très difficile voire impossible à réaliser dans la pratique pour de multiples raisons. Il faut tout d'abord obtenir les licences d'émission suffisantes auprès des organismes locaux réglementant l'attribution des fréquences aux usagers. Il faut aussi tenir compte de l'environnement radio et des conditions météorologiques pouvant affecter les transmissions: orages, décharges statiques etc. La configuration du site traversé et les difficultés locales de liaison peuvent également constituer une difficulté supplémentaire. Pour toutes ces raisons, la bande passante effectivement disponible est souvent bien inférieure à celle requise pour la transmission des données en temps réel.

En plus des contraintes proprement hertziennes, il faut tenir compte que la vitesse d'acquisition sismique est aussi dictée par les conditions de l'exploration. Dans les zones intermédiaires en bordure des rivages, les sources sismiques sont par exemple des canons à airs remorqués en immersion par un ou plusieurs bateaux évoluant à vitesse constante qui imposent une rythme de "tir" particulier et aussi des interruptions périodiques des sessions sismiques, le temps nécessaire pour effectuer des demi-tours et se réaligner suivant un nouveau profil.

Pour éviter que les problèmes de transmission ne constituent un frein à l'évolution des systèmes sismiques la tendance est de recourir à des procédés de compression de données choisis pour être compatibles avec les exigences propres des géophysiciens.

Par la demande de brevet FR 2 757 641 du demandeur, on connaît une méthode de transmission en deux temps de données sismiques compressées à une station centrale des signaux sismiques reçus par des récepteurs sismiques et acquises par des unités de collecte disposées sur le terrain, qui est bien adaptée à tirer au mieux parti de la distribution irrégulière des temps forts de collecte de données sismiques, dans la pratique usuelle des campagnes d'exploration sismique. Cette méthode permet de réaliser aussi bien des transmissions de contrôle destinées à vérifier le bon déroulement des opérations d'acquisition par chacun des boîtiers d'acquisition sur le terrain, que des rapatriements complets des données sismiques à une station centrale de commande, de façon à restituer sans perte toutes les traces sismiques transmises, en limitant au mieux les durées de transmission nécessaires à cet effet.

Elle comporte une transmission en deux temps des données sismiques avec, dans un premier temps, une transmission de données compressées permettant un contrôle de la qualité de fonctionnement des unités locales et, dans un deuxième temps, une transmission de données (compressées ou non) un enregistrement sans perte des données sismiques à la station distante.

La méthode précédente comporte par exemple l'enregistrement local des données, une compression des données avec un taux de compression choisi, suivie d'une première étape de transmission de ces données compressées, une détermination de la différence entre les données enregistrées localement et les données correspondantes compressées, une deuxième étape postérieure de transfert de cette différence, et une reconstitution à la station centrale des données sismiques collectées par chaque unité locale de collecte, par combinaison des données reçues au cours des deux étapes de transmission et de transfert.

Dans le premier temps, on applique à chaque trace sismique une compression dont le taux est adapté à la durée d'une fenêtre de transmission que l'on place durant des intervalles de temps entre des cycles successifs d'émission-réception sismique, ainsi qu'au débit de la voie de transmission utilisée. Une partie au moins de chaque trace sismique est ainsi transmise ce qui permet à un opérateur à la station centrale de vérifier que l'enregistrement s'effectue correctement dans chaque unité de collecte. Dans un deuxième temps, à la fin de la session sismique en cours par exemple, les traces sismiques sont reconstituées dans la station centrale avec toute la précision nécessaire.

La méthode selon l'invention permet de conduire le rapatriement à une station éloignée par des voies de transmission, de données sismiques obtenues au cours de cycles d'émission-réception successifs d'une session sismique, comportant l'émission d'ondes élastiques dans une formation souterraine, la réception par des récepteurs des ondes renvoyées par la formation souterraine en réponse aux ondes émises et leur acquisition par un équipement de collecte de données comprenant une pluralité de boîtiers d'acquisition adaptés à acquérir les données sismiques et à les mémoriser dans des moyens de mémorisation et à les transmettre vers une station éloignée, permettant d'amortir les variations de débit de transmission des données au cours des cycles d'émission-réception successifs (du fait par exemple que la durée nécessaire à la transmission des données collectées au cours d'une partie au moins des cycles d'émission-réception de la session, par les voies de transmission disponibles, est supérieure à la durée de fenêtres de transmission allouées aux boîtiers d'acquisition).

La méthode est caractérisée en ce qu'elle comporte :
- l'accumulation ordonnée dans une mémoire de stockage de chaque boîtier d'acquisition de données obtenues au cours des cycles successifs d'émission-réception, de manière à constituer un flot de données à transmettre :

- le transfert progressif du flot de données mémorisées par une voie de transmission depuis chaque boîtier d'acquisition vers la station éloignée, par lecture de la mémoire de stockage, avec une répartition des données accumulées sur une série de fenêtres de transmission successives de manière à rattraper les retards éventuels de transmission à l'issue de cette série de fenêtres.

Lorsque la durée nécessaire à la transmission de données sur les voies de transmission disponibles durant un certain nombre k de cycles d'émission-réception de la dite session par la voie de transmission utilisée est par exemple supérieure à la durée de transmission allouée à chaque boîtier d'acquisition durant ces k cycles d'émission-réception, on répartit les données de façon que cette durée de transmission soit au plus égale en moyenne à la durée de la fenêtre de transmission allouée à chaque boîtier d'acquisition, sur un certain nombre N (N>k) de cycles successifs d'émission-réception de la dite session.

Suivant un mode de mise en oeuvre, la méthode comporte le transfert progressif du flot de données depuis chaque boîtier d'acquisition vers la station éloignée avec un décalage de temps par rapport à l'instant de la mémorisation qui peut être égal à au moins une fraction déterminée d'un cycle d'émission-réception ou à un nombre entier de cycles d'émission-réception, et aussi, durant l'acquisition des données de chaque cycle d'émission-réception, une transmission de données représentatives de contrôles de qualité.

Suivant un mode de mise en oeuvre, le transfert de données est effectué avec un décalage de temps effectif différent pour des fractions distinctes des données sismiques acquises au cours d'un même cycle d'émission-réception.

La méthode de transmission peut comporter par exemple l'application à au moins une partie des données accumulées dans des boîtiers d'acquisition, d'une compression sans perte, ainsi qu'une décompression d'une partie au moins des données accumulées dans des boîtiers d'acquisition, avant leur transmission à la station éloignée.

Suivant un mode préféré de mise en oeuvre, une partie des données transmises durant chaque fenêtre de transmission allouée, est représentative de résultats de contrôles de qualité effectués et peuvent être formées par exemple par une compression avec ou sans perte de données sismiques acquises.

Les données transmises peuvent être décompressées à la station éloignée.

Le système de transmission selon l'invention comporte des boîtiers d'acquisition incluant chacun des moyens d'acquisition, des mémoires incluant au moins une mémoire de stockage de données, des moyens de transmission de données entre les différents boîtiers d'acquisition et la station éloignée, par des voies de transmission, et un ensemble de traitement des données sismiques, des moyens de gestion dans les ensembles de traitement, pour commander la mémorisation dans chaque mémoire de stockage, de données acquises au cours des cycles successifs d'émission-réception, des moyens dans les ensembles de traitement, pour commander le transfert des données mémorisées dans chaque mémoire de stockage via les moyens de transmission vers la station éloignée et des moyens dans la station éloignée pour recevoir les données reçues.

Le système est caractérisé en ce que les dits moyens de gestion sont adaptés à disposer les données acquises au cours des cycles successifs dans chaque mémoire de stockage sous la forme d'un flot ordonné de données, les moyens pour commander le transfert progressif des données mémorisées sont adaptés à répartir le flot ordonné sur une succession de fenêtres de transmission allouées aux différents boîtiers d'acquisition, et les moyens de réception dans la station éloignée, comportent un processeur adapté à reconstruire la continuité du flot ordonné à partir des données réparties dans les fenêtres successives de transmission.

L'ensemble de traitement comporte de préférence des moyens pour compresser les données avant leur mémorisation dans les boîtiers d'acquisition et pour les décompresser éventuellement avant leur transmission à la station éloignée, celle-ci comportant par exemple des moyens pour décompresser les données reçues.

L'ensemble de traitement dans chaque boîtier d'acquisition comporte de préférence un processeur de signal programmé pour appliquer aux données sismiques un algorithme de compression avec ou sans perte ou bien éventuellement au moins deux algorithmes différents de compression avec transfert dans la mémoire de stockage correspondante des données sismiques compressées avec celui des algorithmes qui produit le taux de compression le plus fort.

Suivant un mode de réalisation, la mémoire de stockage comporte une mémoire de type FIFO pour le rangement ordonné des données sismiques, l'ensemble de traitement comporte des moyens de lecture ordonnée de chaque mémoire de stockage avec un débit dépendant des moyens de transmission disponibles, et la station éloignée comprend des moyens de reconstitution de toutes les données sismiques transmises.

Le système est particulièrement bien adapté à l'utilisation comme moyens de transmission, des moyens radio.

De préférence, l'ensemble de traitement de chaque boîtier d'acquisition, est adapté à appliquer aux données sismiques des traitements préalables.

La capacité importante des mémoires de stockage permet d'accumuler une masse importante de données et autorise un décalage important entre l'instant d'accumulation des données et l'instant où elle sont effectivement transmises. La méthode de transmission permet donc d'amortir avec souplesse les irrégularités aux causes multiples que l'on peut noter dans le déroulement des sessions sismiques qui occasionne des variations importantes du débit moyen de l'information sismique acquise sur le terrain.

D'autres caractéristiques et avantages de la méthode et du système selon l'invention, apparaîtront à la lecture de la description ci-après d'un exemple non limitatif de mise en oeuvre appliqué à la transmission de données sismiques, en se référant aux dessins annexés où :
- la Fig. 1 montre schématiquement un dispositif d'acquisition et de transmission de données sismiques; et
- la Fig.2 montre schématiquement l'organisation d'un boîtier local d'acquisition.

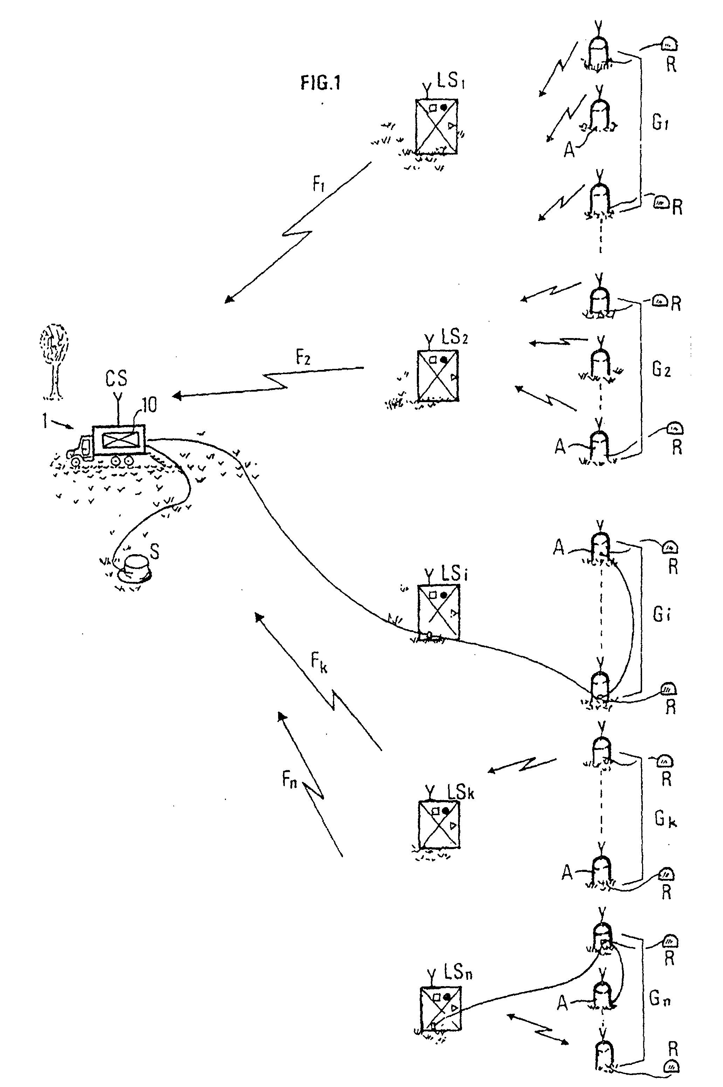

Le dispositif sismique schématisé à la Fig. 1 comporte un ensemble souvent considérable (de plusieurs centaines à plusieurs milliers) de récepteurs sismiques R répartis à intervalles les uns des autres sur une zone à explorer, suivant une disposition convenant pour le type de prospection 2D ou 3D à effectuer, ces récepteurs captant les ondes sismiques renvoyées par des discontinuités souterraines, en réponse à la transmission dans le sol d'ondes sismiques produites par une source S, et une station éloignée telle qu'une station centrale de commande et d'enregistrement 1, où tous les signaux sismiques collectés sont finalement centralisé par le moyen du système de transmission qui va être décrit. Chacun de ces récepteurs R est constitué le plus souvent d'une bretelle de capteurs élémentaires alignés qui produisent chacun une "trace sismique".

Le dispositif comporte un ensemble de boîtiers d'acquisition ou unités locales A de collecte des données sismiques, chacun adaptée à acquérir chacun n traces sismiques (n variant de 1 à 6 par exemple).

L'ensemble des boîtiers d'acquisition A communique avec une station centrale CS soit directement (par radio ou par câble), soit éventuellement par l'intermédiaire de stations intermédiaires LS avec des fonctions plus ou moins complexes. Il peut s'agir de concentrateurs destinés à organiser et séquencer les échanges entre les boîtiers (ou unités) d'acquisition A et la station centrale CS comme décrit par exemple dans le brevet EP-A-594 477 du demandeur. Outre ces fonctions de concentration, chaque station intermédiaire LS peut être dotée de fonctions de commande et de contrôle de tâches diverses exécutées par les unités locales A, sous le contrôle de la station centrale comme décrit dans le brevet FR-A-2 720 518. Chacune de ces stations intermédiaires LS contrôle par exemple un nombre p d'unités locales d'acquisition A. Elles communiquent avec les unités de leurs groupes respectifs le plus souvent par une liaison radio. Les unités intermédiaires communiquent généralement avec la station centrale CS par des canaux hertziens F1, F2, ..., Fn.

La source S peut être impulsionnelle (une charge explosive par exemple ou un canon à air) ou bien encore un vibrateur. Cette source peut être couplée avec les terrains de la zone à explorer et reliée par radio ou câble de commande avec la station centrale CS ou bien dans le cas d'une exploration de zones côtières, éventuellement remorquée en immersion par un bateau boute-feu, relié par radio avec la station centrale.

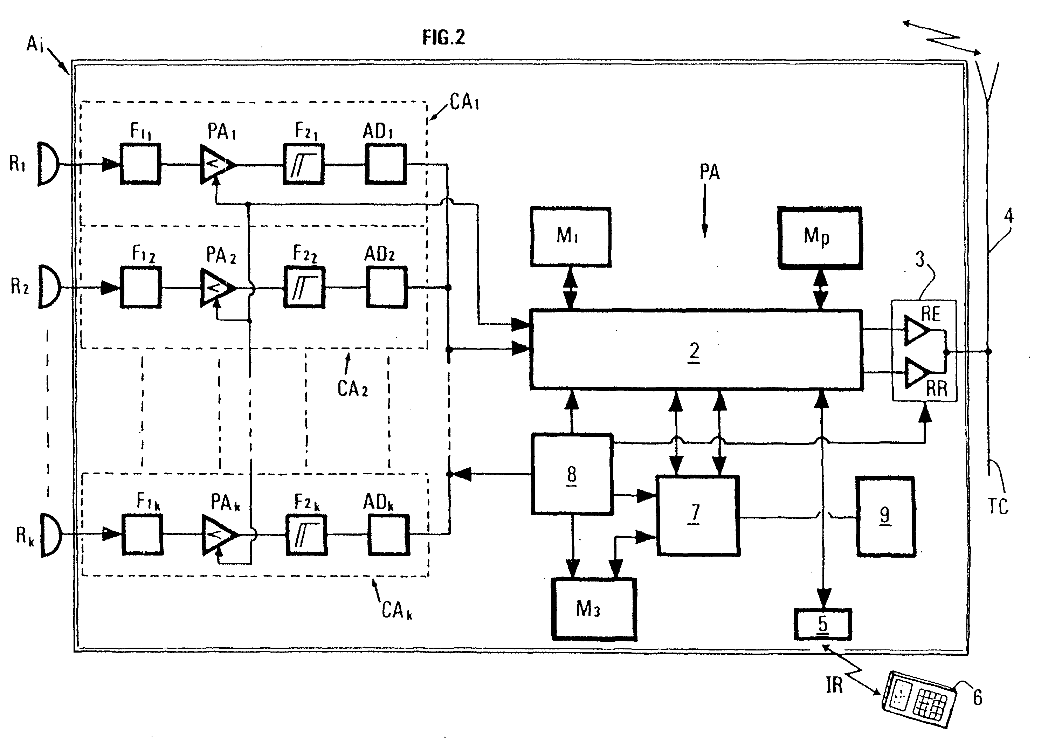

Chaque boîtier d'acquisition A (Fig.2) est adapté à l'acquisition d'un nombre k (k=6 par exemple) de récepteurs sismiques R₁, R₂, Rₖ, fournissant chacun une "trace" sismique. A cet effet, il comporte par exemple k chaînes d'acquisition CA₁ à CAₖ recevant respectivement les k signaux et comportant chacune par exemple un filtre passe-bas F₁₁, F₁₂, ... Fₖ, un pré-amplificateur PA₁, PA₂,... PAₖ, un filtre passe-haut F₂₁, F₂₂, ... F2ₖ et un convertisseur analogique-numérique (ADC) AD₁, AD₂, ..., ADₖ pour convertir les signaux analogiques amplifiés et filtrés en mots numériques. Toutes les chaînes d'acquisition sont connectées à un microprocesseur 2 traitant les mots numériques de 16 à 32 bits par exemple, programmé pour gérer l'acquisition et les échanges avec la station éloignée (non représentée). Au microprocesseur 2 sont associés une mémoire de travail M₁ et une mémoire Mp pour les programmes. Le processeur 2 est connecté à une unité 3 d'émission-réception adaptée à la voie de transmission employée pour la communication avec la station éloignée. S'il s'agit d'une voie hertzienne, l'unité 3 comporte un radio-émetteur RE et un radio-récepteur RR qui communique avec une antenne 4. Une unité d'interface 5 décrite dans le brevet FR-A-2.608.780 précité, permet en outre une communication par rayons infra-rouges avec un boîtier d'initialisation 6 à l'aide duquel un opérateur peut éventuellement communiquer au processeur de gestion 2, des instructions d'adressage et de sélection des paramètres de fonctionnement des chaînes d'acquisition.

Chaque boîtier d'acquisition Ai comporte également de préférence un processeur 7 spécialisé dans le traitement des signaux. Tel que par exemple un processeur à 32 bits à virgule flottante du type DSP 96002 par exemple, qui est associé à un dispositif du type DMA pour accélérer les transferts par blocs de données entre les deux processeurs 2 et 7. A ce dernier, est adjointe une mémoire de travail M3. Chaque boîtier d'acquisition comporte aussi une alimentation électrique autonome 8.

Le processeur général 2 a pour fonctions de réaliser le décodage des ordres transmis par la station éloignée, et de gérer :
- l'acquisition des signaux des récepteurs R₁ à Rₖ par les différentes chaînes d'acquisition,
- les transmissions en relation avec l'unité de transmission 3;
- la mémoire M₁ pour le stockage temporaire des données;
- les entrées-sorties;
- les interruptions entre programmes;
- les échanges avec le processeur de calcul DSP 7 etc.

Le processeur de calcul DSP (7) est particulièrement adapté à effectuer à grande vitesse des opérations telles que des conversions de format, des multiplications de nombres complexes, des transformations de Fourier du type FFT, des corrélations entre les signaux reçus et les signaux émis, des filtrages numériques, des sommations de tirs successifs avec élimination des bruits perturbateurs de nature non sismique, des combinaisons entre eux des signaux délivrés par des récepteurs sismiques multi-axes tels que des géophones tri-axiaux par exemple, etc. Les pré-traitements accomplis localement avant transmission contribuent à réduire sensiblement le nombre de tâches dévolues à la station éloignée et donc la puissance de calcul installée qui devient considérable quand le nombre de traces sismiques à acquérir en temps réel est de plusieurs centaines voire même dépasse mille.

Chaque boîtier d'acquisition comporte en outre une mémoire de stockage de grande capacité 9 capable d'absorber le volume de données qui est transmis en différé à la station éloignée suivant les différents modes de fonctionnement qui vont être décrits plus loin. On utilise par exemple une mémoire dite "flash". Cette mémoire peut par exemple être une mémoire de type FIFO ou qui peut fonctionner comme une mémoire de type FIFO de capacité suffisante pour contenir les données sismiques de plusieurs centaines de cycles d'émission-réception sismique ou "tirs" (500 tirs par exemple).

La méthode selon l'invention, dans sa plus grande généralité est basée sur une accumulation de données dans la mémoire de stockage 9 de données obtenues au cours des cycles d'émission-réception sismiques successifs de façon à obtenir un flot de données à transmettre, et sur un transfert ordonné plus ou moins différé de son contenu à la station éloignée par la voie de transmission disponible. Ces données correspondent aux données sismiques acquises et éventuellement prétraitées par le processeur 7 comme indiqué ci-dessus et éventuellement (de préférence) compressées au préalable.

Le débit effectif de décharge de la mémoire de stockage 9 et de transfert vers la station éloignée, dépend de plusieurs facteurs.

Il dépend d'abord du débit des voies de transmission utilisées, qui peut varier selon les cas en fonction de la disponibilité des canaux hertziens que l'on a obtenu de l'organisme local de gestion des émissions radio pour la campagne d'exploration, et aussi des conditions locales de transmission.

Il dépend également du taux de compression qui a été effectivement appliqué aux données qui modifie la "longueur" des traces sismiques compressées, longueur étant utilisé ici pour désigner l'espace de mémoire FIFO nécessaire à leur stockage.

Il dépend aussi du débit moyen de l'information sismique acquise lié à la fréquence d'échantillonnage des signaux sismiques reçus. Pour un pas d'échantillonnage fixé, le débit moyen dépend bien évidemment de l'intervalle entre les cycles d'émission-réception d'une session sismique qui peut être régulier avec une intervalle entre les cycles de quelques secondes (2s par exemple) ou irrégulier en raison d'interruptions techniques des sessions d'acquisition sismique. Des interruptions sont en effet nécessaires par exemple pour déplacer la source (applications terrestres) ou pour permettre par exemple au navire remorquant la source marine qui croise au large de faire un demi-tour et de se réaligner pour faire la passe suivante le long du profil sismique pour les applications de sismique offshore.

La "longueur" de l'information compressée est très variable. Pour les traces proches de la source où le rapport du signal au bruit S/B est grand, on peut obtenir un taux de compression très grand (de l'ordre de 70 à 80%) et donc une courte "longueur". Pour les traces éloignées de la source pour lesquelles le S/B est plus petit, le taux de compression effectivement appliqué peut être faible voire même nul. Il peut même arriver que la trace compressée soit plus "longue" que l'original si le rapport S/B est trop faible.

Dans la réalisation pratique où, de préférence, on compresse les données sismiques, le processeur de signal (DSP) dans chaque boîtier d'acquisition Ai, est avantageusement programmé pour optimiser la compression. Il peut par exemple appliquer parallèlement au moins deux algorithmes de compression différents avec des critères différents qui font intervenir par exemple l'énergie du signal sismique, le type de source sismique utilisé qu'il s'agisse d'un vibrateur, d'un canon à air, d'une charge explosive etc. Une comparaison est effectuée à l'issue de ces compressions parallèles sans perte entre les données compressées (les traces sismiques en l'occurrence) et les données initiales et l'on retient le résultat le plus "court" (possédant le taux de compression le meilleur). Le processeur de signal peut encore être programmé pour choisir sur certains critères opérationnels, l'algorithme de compression qui va offrir le meilleur taux de compression sans perte possible.

Globalement en tenant compte de tous les facteurs pouvant jouer sur le taux de compression effectif appliqué aux différentes traces d'un même jeu de traces, on vérifie dans la pratique que l'on obtient un taux moyen de 40 à 50%.

La mémoire de stockage utilisée avec sa capacité importante, permet de tenir compte avec beaucoup de souplesse des irrégularités dans le déroulement des sessions sismiques qui occasionne des variations importantes du débit moyen de l'information sismique acquise et ceci quel que soit le débit effectif des voies de transmission utilisées. Le retard entre l'acquisition d'une trace et son transfert effectif à la station centrale peut varier ainsi dans de larges proportions et atteindre si le volume de mémoire le permet, plusieurs dizaine de minutes (durée de plusieurs centaines de cycles d'acquisition sismique ou "tirs") retard acceptable par les géophysiciens surtout si des transmissions partielles sont ménagées entre les tirs successifs pour tester que l'acquisition se déroule normalement, comme le prévoit la méthode décrite dans le brevet EP 0.275.781 (US 4.905.205).

Différents modes d'organisation du séquencement des acquisitions et transferts vont maintenant être décrits.

Le système de transmission se prête tout d'abord à deux séquencements d'opérations différents qui ne fait pas appel à la mémoire de stockage 9 mais seulement aux mémoires de travail M1 et M2 :
1) celui où l'on acquiert le tir N et ensuite on transfert les données correspondantes, et
2) celui où l'on acquiert le tir N alors que dans le même temps on transfert le tir N-1.
   Les modes suivants comportent l'utilisation de la mémoire de stockage 9 pour des transferts différés.
3) On acquiert successivement les données d'un certain nombre de tirs N, N+1, N+2 etc avec mémorisation à chaque fois des données correspondantes; avec remplissage progressif de la mémoire de stockage 9. Suivant ce mode, l'ensemble de traitement n'exerce aucun contrôle de qualité. Les trois modes suivants comportent un tel contrôle.
4) Suivant une variante du mode précédent, durant l'acquisition d'un des tirs de la série, on transmet des données partielles du tir précédent, suffisante pour que les opérateurs, à la station éloignée, puissent effectuer un contrôle de qualité (QC) et vérifier en somme que le boîtier d'acquisition fonctionne correctement. De tels transmissions partielles à des fins de contrôle sont déjà décrites dans la demande de brevet FR 96/15.823 précitée, par exemple.
5) On acquiert et on mémorise dans la mémoire de stockage 9 les données d'une série de tirs successifs N, N+1, N+2 etc et durant l'acquisition des données de plusieurs des tirs suivants N+1, N+2 etc, on lit et on transmet des fractions successives des données du tir N. Ce mode de fonctionnement convient dans le cas où le débit de la voie de transmission utilisée et/ou le volume de données de chaque tir rend nécessaire un temps plus long de transmission.
6) On acquiert les données du tir N et dans le même temps on lit et transmet une fraction déterminée X des données du tir N-p, et on mémorise dans la mémoire de stockage 9 les données de ce tir N. Ce mode permet de répartir la transmission des données d'un même tir sur plusieurs (i) cycles d'émission-réception ultérieurs sans retarder le rythme de succession de ces cycles. Les données sont donc réparties en i groupes de traces transmis successivement.
   Si N=5 par exemple et le nombre total de traces est de 200, on fractionne ce nombre en 4 groupes de traces de 50 traces chacun ce qui nécessite 4 cycles successifs pour la lecture et la transmission de ces 4 groupes. Durant l'acquisition des tirs successifs N°5, N°6, N°7, N°8, on relit et transmet successivement les traces 1 à 50, 51 à 100, 101 à 151 et 151 à 200 du tir N°4.
7) Ce mode correspond à l'acquisition d'un tir N et simultanément à la relecture et transmission des données d'un tir précédent N-x, suivie d'un stockage du tir N dans la mémoire de stockage 9. Il s'agit d'un mode où la mémoire 9 fonctionne comme une mémoire FIFO et sans entraîner un quelconque ralentissement du rythme des tirs comme cela peut se produire dans les modes 1 et 2 ci-dessus. Le décalage de temps entre la mémorisation des données d'un tir et leur transmission effective par relecture de la mémoire 9 dépend bien évidemment des conditions de transmission i.e. le nombre de fréquences disponibles et leurs débits de transmission respectifs.
8) Ce mode correspond à la relecture et à la transmission des données d'un tirs précédemment mémorisées.
9) Ce mode correspond au cas où le volume des données sismiques acquises à rapatrier est difficilement compatible avec les moyens dont on peut disposer pour relier chacun des boîtiers d'acquisition avec la station centrale. C'est ce qui se produit quand le nombre de fréquences de transmission dont on peut disposer et/ou leurs débits de transmission est insuffisant. C'est également le cas quand la source sismique est par exemple un canon à air capable de « tirer » à des intervalles rapprochés (tous les 15s par exemple), ce qui rend très « étroites » les fenêtres de transmission, trop étroites de toute façon pour assurer un rapatriement complet dans un délai raisonnable. On utilise dans ce cas le procédé de transfert déjà décrit dans le brevet US 4 905 205 du demandeur, en concentrant la transmission d'une partie au moins ou de la totalité des données accumulées sur une seul fenêtre de transmission durant laquelle on connecte à chaque boîtier d'acquisition une mémoire de masse déplacée sur le terrain et reliée à lui par une liaison à courte portée : un câble ou une liaison optique à infra-rouge par exemple. Dans une telle implémentation, on profite de la souplesse procurée par la mémoire de stockage où les données accumulées en continu sont toutes individuellement identifiées et répertoriées. Le vidage de la mémoire de stockage 9 de chaque boîtier peut dans ces conditions être effectué à tout moment, même durant une phase d'acquisition et dans n'importe quel ordre.

Tous les modes précédents fonctionnent que les données sismiques soient ou non compressées avant leur stockage dans la mémoire de stockage 9 et qu'elles soient, à la relecture, transmises sous forme compressée ou après décompression.

On applique de préférence aux données sismiques des algorithmes de compression sans perte, comme décrit dans la demande de brevet FR 2 757 641 du demandeur déjà citée. Les données partielles transmises à des fins de contrôle effectués dans certains des modes précédents peuvent être soit des données partielles obtenues par une compression sans perte, soit des données compressées avec perte mais restant malgré le taux de compression appliqué, suffisamment représentative pour juger de la qualité du fonctionnement des boîtiers d'acquisition.

Les données transmises à la station éloignée CS sont de préférence décompressées par un processeur 10 (Fig.1) avant leur enregistrement sur une mémoire de masse. On n'exclut pas pour autant le cas où les données mémorisées dans chaque boîtier d'acquisition sous une forme compressée, sont décompressées par le processeur 7 (Fig.2) avant leur transmission à la station éloignée CS.

## Revendications

1. Méthode de transmission pour conduire le rapatriement à une station éloignée (CS, LS) par des voies de transmission, de données sismiques obtenues au cours de cycles d'émission-réception successifs d'une session sismique, comportant l'émission d'ondes élastiques dans une formation souterraine, la réception par des récepteurs (R) des ondes renvoyées par la formation souterraine en réponse aux ondes émises et leur acquisition par un équipement de collecte de données comprenant une pluralité de boîtiers d'acquisition (Ai) adaptés à acquérir les données sismiques, à les mémoriser et à les transmettre vers la station éloignée (CS, LS), lorsque la durée nécessaire à la transmission des données collectées par les boîtiers d'acquisition au cours d'une partie au moins des cycles d'émission-réception de la session, par les voies de transmission disponibles, est incompatible avec la durée de fenêtres de transmission allouées aux boîtiers d'acquisition (Ai), **caractérisée en ce qu'**elle comporte :
- l'accumulation ordonnée dans des mémoires de stockage (9) contenus dans les boîtiers d'acquisition (Ai), de données obtenues au cours des cycles successifs d'émission-réception, de manière à constituer des flots de données à transmettre ;
- le transfert progressif de ces flots de données mémorisées par des voies de transmission depuis les différents boîtiers d'acquisition (Ai) jusqu'à la station éloignée, par lecture des mémoires de stockage (9), avec une répartition des données accumulées sur des fenêtres de transmission successives de manière à rattraper les retards éventuels de transmission à l'issue de cette série de fenêtres de transmission.

2. Méthode selon la revendication 1, **caractérisée en ce que**, la durée nécessaire à la transmission de données sur chaque voie de transmission disponible durant un certain nombre k de cycles d'émission-réception de la dite session par les voies de transmission utilisées étant supérieure aux durées de transmission allouées à chaque boîtier d'acquisition (Ai) durant ces k cycles d'émission-réception, on répartit les données de façon que cette durée de transmission soit au plus égale en moyenne à la durée de la fenêtre de transmission allouée à chaque boîtier d'acquisition (Ai), sur un certain nombre N (N>k) de cycles successifs d'émission-réception de la dite session.

3. Méthode de transmission selon la revendication 2, **caractérisée en ce qu'**elle comporte le transfert progressif du flot de données depuis chaque boîtier d'acquisition vers la station éloignée avec un décalage de temps par rapport à l'instant de la mémorisation, égal à au moins une fraction déterminée d'un cycle d'émission-réception.

4. Méthode de transmission selon la revendication 2 ou 3, **caractérisée en ce que** le dit transfert est effectué avec un décalage de temps égal à un nombre entier n (n≥1) de cycles, la méthode comportant en outre durant l'acquisition des données de chaque cycle d'émission-réception, une transmission de données représentatives de contrôles de qualité.

5. Méthode de transmission selon l'une des revendications 2 à 4, **caractérisée en ce que** le dit transfert est effectué avec un décalage de temps effectif différent pour des fractions distinctes des données sismiques acquises au cours d'un même cycle d'émission-réception.

6. Méthode de transmission selon l'une des revendications 2 à 5, **caractérisée en ce qu'**elle comporte l'application à au moins une partie des données accumulées dans des boîtiers d'acquisition (Ai), d'une compression avec ou sans perte.

7. Méthode de transmission selon la revendication 6, **caractérisée en ce qu'**elle comporte en outre une décompression d'une partie au moins des données accumulées dans des boîtiers d'acquisition (Ai), avant leur transmission à la station éloignée.

8. Méthode de transmission selon l'une des revendications 2 à 7, **caractérisée en ce qu'**une partie des données transmises durant chaque fenêtre de transmission allouée, est représentative de résultats de contrôles de qualité effectués.

9. Méthode selon la revendication précédente, **caractérisée en ce que** les données représentatives des résultats de contrôles de qualité, sont formées par une compression sans perte de données sismiques acquises.

10. Méthode selon la revendication 8, **caractérisée en ce que** les données représentatives des résultats de contrôle de qualité, sont formées par une compression avec perte de données sismiques acquises.

11. Méthode selon la revendication 6, 9 ou 10, **caractérisée en ce qu'**elle comporte en outre une décompression des données à la station éloignée.

12. Méthode selon la revendication 1, **caractérisé en ce que** le transfert progressif des flots de données est effectué par connexions successives aux différents boîtiers d'acquisition (Ai), dans n'importe quel ordre et à n'importe quel moment de la session, d'une mémoire de masse déplacée sur le terrain, durant des fenêtres de transmission supplémentaires, transfert ultérieur des données de la mémoire de masse à la station éloignée (CS, LS) et remise en ordre des données transférées.

13. Système de transmission à une station éloignée (CS, LS) de données sismiques obtenues au cours de cycles d'émission-réception successifs comportant la transmission d'ondes élastiques dans une formation souterraine, la réception des ondes renvoyées par la formation en réponse aux ondes transmises et leur acquisition par un équipement de collecte de données comprenant des boîtiers d'acquisition (Ai) incluant chacun des moyens d'acquisition (CA), des mémoires incluant au moins une mémoire de stockage de données (9), des moyens (3, 6) de transmission de données entre les différents boîtiers d'acquisition (Ai) et la station éloignée (CS, LS), par des voies de transmission (4), et un ensemble de traitement (PA) des données sismiques, des moyens de gestion dans les ensembles de traitement (PA), pour commander la mémorisation dans chaque mémoire de stockage (9), de données acquises au cours des cycles successifs d'émission-réception, des moyens dans les ensembles de traitement (PA), pour commander le transfert progressif des données mémorisées dans chaque mémoire de stockage (9) via les moyens de transmission (3, 4) vers la station éloignée (CS, LS) et des moyens dans la station éloignée (CS, LS) pour recevoir les données reçues, **caractérisé en ce que** les dits moyens de gestion sont adaptés à disposer les données acquises au cours des cycles successifs dans chaque mémoire de stockage (9) sous la forme d'un flot ordonné de données, les moyens pour commander le transfert des données mémorisées sont adaptés à répartir le flot ordonné sur une succession de fenêtres de transmission allouées aux différents boîtiers d'acquisition, et les moyens de réception dans la station éloignée (CS, LS), comportent un processeur (10) adapté à reconstruire la continuité du flot ordonné à partir des données réparties dans les fenêtres successives de transmission.

14. Système selon la revendication 13, **caractérisé en ce qu'**il comporte des moyens dans l'ensemble de traitement (PA), pour compresser les données avant leur mémorisation dans les boîtiers d'acquisition (Ai) et pour les décompresser avant leur transmission à la station éloignée(CS, LS).

15. Système selon la revendication 13, **caractérisé en ce qu'**il comporte des moyens dans l'ensemble de traitement (PA), pour compresser les données à transmettre et le processeur (10) dans la station éloignée (CS, LS) est adapté à décompresser les données reçues.

16. Système selon la revendication précédente, **caractérisé en ce qu'**il comporte des moyens dans l'ensemble de traitement (PA) de chaque boîtier d'acquisition (Ai) pour appliquer aux données à transmettre un algorithme de compression avec ou sans perte.

17. Système selon l'une des revendications 14 à 16, **caractérisé en ce que** l'ensemble de traitement (PA) de chaque boîtier d'acquisition (Ai) comporte un processeur de signal (7) programmé pour appliquer aux données sismiques un taux de compression sans perte dépendant des données reçues par les récepteurs sismiques.

18. Système selon l'une des revendications 13 à 17, **caractérisé en ce que** chaque mémoire de stockage (9) comporte une mémoire de type FIFO pour le rangement ordonné des données sismiques et l'ensemble de traitement (PA) comportant des moyens de lecture ordonnée de chaque mémoire de stockage (9) avec un débit dépendant des moyens de transmission disponibles.

19. Système selon l'une des revendications 13 à 18, **caractérisé en ce que** les moyens de transmission (3, 4) sont des moyens radio ou des câbles de transmission.

20. Système selon l'une des revendications 13 à 19, **caractérisé en ce que** l'ensemble de traitement (PA) dans chaque boîtier d'acquisition (Ai) comporte au moins un processeur de signal (7) adapté à appliquer aux données à transmettre au moins un algorithme de compression.

21. Système selon l'une des revendications 13 à 20, **caractérisé en ce que** l'ensemble de traitement (PA) dans chaque boîtier d'acquisition (Ai) est adapté à appliquer aux données à transmettre au moins deux algorithmes différents de compression et à transférer dans chaque mémoire de stockage correspondante (9) des données sismiques compressées avec celui des algorithmes qui produit le taux de compression le plus fort.

22. Système selon l'une des revendications 13 à 21, **caractérisé en ce que** l'ensemble de traitement (PA) de chaque boîtier d'acquisition (Ai) est adapté à appliquer aux données sismiques des traitements préalables.

23. Système selon la revendication 13, **caractérisé en ce que** les moyens de transmission (3, 4) comportent une mémoire de masse déplacée jusqu'au voisinage des différents boîtiers d'acquisition (Ai) et un moyen de liaison à courte portée (6) pour connecter la mémoire de masse dans un premier temps à chaque mémoire de stockage (9) durant au moins une fenêtre de transmission choisie arbitrairement, de façon à décharger celle-ci, et dans un deuxième temps, pour connecter la mémoire de masse avec la station éloignée (CS, LS).

## Patentansprüche

1. Übertragungsverfahren zum Durchführen der Rückführung von seismischen Daten, die im Verlauf von aufeinanderfolgenden Sende-/Empfangszyklen einer seismischen Session erhalten werden, zu einer entfernten Station (CS, LS) über Übertragungswege, umfassend die Aussendung elastischer Wellen in eine unterirdische Formation, den Empfang durch Empfänger (R) der durch die unterirdische Formation als Antwort auf die ausgesendeten Wellen rückgestrahlten Wellen und ihre Erfassung durch eine Datensammelanlage, die eine Vielzahl von Erfassungsgeräten (Ai) umfasst, die ausgelegt sind, um die seismischen Daten zu erfassen, sie zu speichern und sie zu der entfernten Station (CS, LS) zu übertragen, wenn die Dauer, die zur Übertragung der durch die Erfassungsgeräte gesammelten Daten im Verlauf wenigstens eines Teiles der Sende-/Empfangszyklen der Session notwendig ist, mit der Dauer von Übertragungsfenstern unvereinbar ist, die den Erfassungsgeräten (Ai) zugeteilt sind, **dadurch gekennzeichnet, dass** es umfasst:
a. die geordnete Anhäufung von im Verlauf der aufeinanderfolgenden Sende-/Empfangszyklen erhaltenen Daten in Festspeichern (9), die in den Erfassungsgeräten (Ai) enthalten sind, um zu übertragende Datenmengen zu bilden;
b. den fortschreitenden Transfer dieser gespeicherten Datenmengen über Übertragungswege von den verschiedenen Erfassungsgeräten (Ai) aus bis zur entfernten Station durch Lesen der Festspeicher (9) mit einer Verteilung der angehäuften Daten auf die aufeinanderfolgenden Übertragungsfenster, um die eventuellen Übertragungsverzögerungen nach Abschluss dieser Reihe von Übertragungsfenstern wettzumachen.

2. Verfahren nach Anspruch 1, **dadurch gekennzeichnet, dass**, wenn die Zeit, die zur Übertragung von Daten über jeden verfügbaren Übertragungsweg während einer bestimmten Anzahl k von Sende-/Empfangszyklen der genannten Session über die benutzten Übertragungswege notwendig ist, größer als die Übertragungszeiten ist, die jedem Erfassungsgerät (Ai) während dieser k Sende-/Empfangszyklen zugeteilt sind, die Daten derart verteilt werden, dass diese Übertragungszeit durchschnittlich höchstens gleich der Dauer des jedem Erfassungsgerät (Ai) zugeteilten Übertragungsfensters über eine bestimmte Anzahl N (N>k) aufeinanderfolgender Sende-/Empfangszyklen der genannten Session ist.

3. Übertragungsverfahren nach Anspruch 2, **dadurch gekennzeichnet, dass** es den fortschreitenden Transfer der Datenmenge von jedem Erfassungsgerät aus zur entfernten Station mit einer auf den Zeitpunkt der Speicherung bezogenen Zeitverschiebung umfasst, die gleich wenigstens einem festgelegten Anteil eines Sende-/Empfangszyklus ist.

4. Übertragungsverfahren nach Anspruch 2 oder 3, **dadurch gekennzeichnet, dass** der genannte Transfer mit einer Zeitverschiebung durchgeführt wird, die gleich einer ganzzahligen Anzahl n (n≥1) von Zyklen ist, wobei das Verfahren außerdem während der Erfassung der Daten jedes Sende-/Empfangszyklus eine Übertragung von Daten umfasst, die für Qualitätskontrollen typisch sind.

5. Übertragungsverfahren nach einem der Ansprüche 2 bis 4, **dadurch gekennzeichnet, dass** der genannte Transfer mit einer effektiven Zeitverschiebung durchgeführt wird, die für verschiedene Anteile der im Verlauf eines gleichen Sende-/Empfangszyklus erfassten seismischen Daten unterschiedlich ist.

6. Übertragungsverfahren nach einem der Ansprüche 2 bis 5, **dadurch gekennzeichnet, dass** es bei wenigstens einem Teil der in den Erfassungsgeräten (Ai) angehäuften Daten die Anwendung einer Kompression mit oder ohne Verlust umfasst.

7. Übertragungsverfahren nach Anspruch 6, **dadurch gekennzeichnet, dass** es außerdem eine Dekompression wenigstens eines Teiles der in den Erfassungsgeräten (Ai) angehäuften Daten vor ihrer Übertragung zur entfernten Station umfasst.

8. Übertragungsverfahren nach einem der Ansprüche 2 bis 7, **dadurch gekennzeichnet, dass** ein Teil der während jedes zugeteilten Übertragungsfenster übertragenen Daten für Ergebnisse von durchgeführten Qualitätskontrollen typisch ist.

9. Verfahren nach dem vorhergehenden Anspruch, **dadurch gekennzeichnet, dass** die für Ergebnisse von Qualitätskontrollen typischen Daten durch eine Kompression ohne Verlust von erfassten seismischen Daten gebildet werden.

10. Verfahren nach Anspruch 8, **dadurch gekennzeichnet, dass** die für Ergebnisse von Qualitätskontrollen typischen Daten durch eine Kompression mit Verlust von erfassten seismischen Daten gebildet werden.

11. Verfahren nach Anspruch 6, 9 oder 10, **dadurch gekennzeichnet, dass** es außerdem eine Dekompression der Daten bei der entfernten Station umfasst.

12. Verfahren nach Anspruch 1, **dadurch gekennzeichnet, dass** der fortschreitende Transfer der Datenmenge durch aufeinanderfolgende Verbindungen eines auf dem Gelände verlegten Massenspeichers mit verschiedenen Erfassungsgeräten (Ai) in welcher Reihenfolge auch immer und zu welchem Sessionsaugenblick auch immer während zusätzlicher Übertragungsfenster, der spätere Transfer der Daten vom Massenspeicher zur entfernten Station (CS, LS) und Übergabe in der Reihenfolge der transferierten Daten durchgeführt wird.

13. System zur Übertragung von im Verlauf von aufeinanderfolgenden Sende-/Empfangszyklen erhaltenen seismischen Daten zu einer entfernten Station (CS, LS), umfassend die Aussendung elastischer Wellen in eine unterirdische Formation, den Empfang der durch die Formation als Antwort auf die ausgesendeten Wellen zurückgestrahlten Wellen und ihre Erfassung durch eine Datensammelanlage, die jeweils Erfassungsmittel (CA) enthaltende Erfassungsgeräte (Ai), wenigstens einen Datenfestspeicher (9) enthaltende Speicher, Mittel (3, 6) zur Übertragung von Daten zwischen den verschiedenen Erfassungsgeräten (Ai) und der entfernten Station (CS, LS) über Übertragungswege (4) und eine Einrichtung (PA) zur Verarbeitung der seismischen Daten, Verwaltungsmittel in den Verarbeitungseinrichtungen (PA) zum Steuern der Speicherung von im Verlauf der aufeinanderfolgenden Sende-/Empfangszyklen erfassten Daten in jedem Festspeicher (9), Mittel in den Verarbeitungseinrichtungen (PA) zum Steuern des fortschreitenden Transfers der in jedem Festspeicher (9) gespeicherten Daten über die Übertragungsmittel (3, 4) zur entfernten Station (CS, LS) und Mittel in der entfernten Station (CS, LS) zum Empfangen der entgegengenommenen Daten umfasst, **dadurch gekennzeichnet, dass** die genannten Verwaltungsmittel ausgelegt sind, um die im Verlauf der aufeinanderfolgenden Zyklen erfassten Daten in jedem Festspeicher (9) in Form einer geordneten Datenmenge anzuordnen, die Mittel zum Steuern des Transfers der gespeicherten Daten ausgelegt sind, um die geordnete Menge auf eine Folge von verschiedenen Erfassungsgeräten zugeteilten Übertragungsfenstern zu verteilen, und die Empfangsmittel in der entfernten Station (CS, LS) einen Prozessor (10) enthalten, der ausgelegt ist, um die Stetigkeit der geordneten Datenmenge, ausgehend von den in den aufeinanderfolgenden Übertragungsfenstern verteilten Daten, wiederherzustellen.

14. System nach Anspruch 13, **dadurch gekennzeichnet, dass** es Mittel in der Verarbeitungseinrichtung (PA) zum Komprimieren der Daten vor ihrer Speicherung in den Erfassungsgeräten (Ai) und zu ihrem Dekomprimieren vor ihrer Übertragung zur entfernten Station (CS, LS) umfasst.

15. System nach Anspruch 13, **dadurch gekennzeichnet, dass** es Mittel in der Verarbeitungseinrichtung (PA) zum Komprimieren der zu übertragenden Daten umfasst und der Prozessor (10) in der entfernten Station (CS, LS) ausgelegt ist, um die empfangenen Daten zu dekomprimieren.

16. System nach dem vorhergehenden Anspruch, **dadurch gekennzeichnet, dass** es Mittel in der Verarbeitungseinrichtung (PA) jedes Erfassungsgeräts (Ai) zum Anwenden eines Kompressionsalgorithmus bei den zu übertragenden Daten mit oder ohne Verlust umfasst.

17. System nach einem der Ansprüche 14 bis 16, **dadurch gekennzeichnet, dass** die Verarbeitungseinrichtung (PA) jedes Erfassungsgeräts (Ai) einen programmierten Signalprozessor (7) umfasst, um bei den seismischen Daten ein von den durch die seismischen Empfänger empfangenen Daten abhängendes Kompressionsverhältnis ohne Verlust anzuwenden.

18. System nach einem der Ansprüche 13 bis 17, **dadurch gekennzeichnet, dass** jeder Festspeicher (9) einen FIFO-Speicher für die geordnete Einreihung der seismischen Daten enthält und die Verarbeitungseinrichtung (PA) Mittel zum geordneten Lesen jedes Festspeichers (9) mit einer von den verfügbaren Übertragungsmitteln abhängenden Datenrate umfasst.

19. System nach einem der Ansprüche 13 bis 18, **dadurch gekennzeichnet, dass** die Übertragungsmittel (3, 4) Funkmittel oder Übertragungskabel sind.

20. System nach einem der Ansprüche 13 bis 19, **dadurch gekennzeichnet, dass** die Verarbeitungseinrichtung (PA) in jedem Erfassungsgerät (Ai) wenigstens einen Signalprozessor (7) umfasst, der ausgelegt ist, um bei den zu übertragenden Daten zumindest einen Kompressionsalgorithmus anzuwenden.

21. System nach einem der Ansprüche 13 bis 20, **dadurch gekennzeichnet, dass** die Verarbeitungseinrichtung (PA) in jedem Erfassungsgerät (Ai) ausgelegt ist, um bei den zu übertragenden Daten wenigstens zwei verschiedene Kompressionsalgorithmen anzuwenden und um in jeden entsprechenden Festspeicher (9) seismische Daten zu transferieren, die mit demjenigen der Algorithmen komprimiert sind, der das stärkste Kompressionsverhältnis erzeugt.

22. System nach einem der Ansprüche 13 bis 21, **dadurch gekennzeichnet, dass** die Verarbeitungseinrichtung (PA) jedes Erfassungsgeräts (Ai) ausgelegt ist, um bei den seismischen Daten vorangehende Verarbeitungen anzuwenden.

23. System nach Anspruch 13, **dadurch gekennzeichnet, dass** die Übertragungsmittel (3, 4) einen bis in die Nähe der verschiedenen Erfassungsgeräte (Ai) verlegten Massenspeicher und ein Verbindungsmittel (6) mit kurzer Reichweite umfassen, um den Massenspeicher in einer ersten Zeit mit jedem Festspeicher (9) während wenigstens eines beliebig gewählten Übertragungsfensters zu verbinden, um diesen zu entladen, und in einer zweiten Zeit, um den Massenspeicher mit der entfernten Station (CS, LS) zu verbinden.

## Claims

1. Transmission method to conduct the retrieval to a remote station (CS, LS) via transmission channels of seismic data obtained during successive transmission-reception cycles of a seismic session, including the transmission of elastic waves in a subterranean formation, reception by receivers (R) of the waves returned by the subterranean formation in response to the transmitted waves and their acquisition by data collection equipment comprising a plurality of acquisition units (Ai) suitable for acquiring the seismic data, storing them and transmitting them to the remote station (CS, LS), when the period necessary for transmission of the data collected by the acquisition units during at least a part of the transmission-reception cycles of the session, via the available transmission channels, is incompatible with the duration of transmission windows allocated to the acquisition units (Ai), ***characterised by** the fact that* it includes:
- orderly accumulation in the storage memories (9) contained in the acquisition units (Ai) of data obtained during successive transmission-reception cycles, so as to form streams of data to be transmitted;
- the progressive transfer of these stored data streams via transmission channels from the different acquisition units (Ai) to the remote station, by reading the storage memories (9), with distribution of the accumulated data over successive transmission windows so as to correct possible transmission delays at the end of this series of transmission windows.

2. Method as described in claim 1, ***characterised by** the fact that,* the period necessary for transmission of data over each available transmission channel during a certain number k of transmission-reception cycles of the said session via the transmission channels used being greater than the transmission periods allocated to each acquisition unit (Ai) during these k transmission-reception cycles, the data are distributed so that this transmission period is at most equal on average to the duration of the transmission window allocated to each acquisition unit (Ai), over a certain number N (N > k) of successive transmission-reception cycles of the said session.

3. Transmission method as described in claim 2, ***characterised by** the fact that* it includes the progressive transfer of the data stream from each acquisition unit to the remote station with a time shift relative to the moment of storage in memory, equal to at least a determined fraction of a transmission-reception cycle.

4. Transmission method as described in claim 2 or 3, ***characterised by** the fact that* the said transfer is performed with a time shift equal to a whole number n (n ≥ 1) of cycles, the method also including during the data acquisition of each transmission-reception cycle, a transmission of data representing quality checks.

5. Transmission method as described in one of claims 2 to 4, ***characterised by** the fact that* the said transfer is performed with a different effective time shift for distinct fractions of the seismic data acquired during a same transmission-reception cycle.

6. Transmission method as described in one of claims 2 to 5, ***characterised by** the fact that* it includes the application to at least a part of the data accumulated in the acquisition units (Ai) of lossy or loss-less compression.

7. Transmission method as described in claim 6, ***characterised by** the fact that* it also includes decompression of at least part of the data accumulated in acquisition units (Ai), prior to their transmission to the remote station.

8. Transmission method as described in one of claims 2 to 7, ***characterised by** the fact that* a part of the data transmitted during each allocated transmission window is representative of results of quality checks performed.

9. Method as described in the preceding claim, ***characterised by** the fact that* the data representative of the quality check results are formed by lossless compression of acquired seismic data.

10. Method as described in claim 8, ***characterised by** the fact that* the data representative of the quality check results are formed by lossy compression of acquired seismic data.

11. Method as described in claim 6, 9, or 10, ***characterised by** the fact that* it also includes decompression of the data at the remote station.

12. Method as described in claim 1, ***characterised by** the fact that* the progressive transfer of the data strings is performed by successive connections to the different acquisition units (Ai), in any order and at any moment in the session, of a bulk memory displaced on the ground, during additional transmission windows, subsequent transfer of the data from the bulk memory to the remote station (CS, LS), and placing the transferred data back in order.

13. System for transmission to a remote station (CS, LS) of seismic data obtained during successive transmission-reception cycles including the transmission of elastic waves in a subterranean formation, reception of the waves returned by the formation in response to the transmitted waves and their acquisition by data collection equipment comprising acquisition units (Ai) each including acquisition means (CA), memories including at least one data storage memory (9), means (3, 6) for transmission of data between the different acquisition units (Ai) and the remote station (CS, LS), via transmission channels (4), and a unit for processing (PA) the seismic data, management means in the processing units (PA), to control storage in memory in each storage memory (9) of data acquired during successive transmission-reception cycles, means in the processing units (PA) to control the progressive transfer of the data stored in each storage memory (9) via the transmission means (3, 4) to the remote station (CS, LS) and means in the remote station (CS, LS) to receive the received data, **characterised by** the fact that the said management means are suitable to arrange the data acquired during successive cycles in each storage memory (9) in the form of an ordered data stream, the means for controlling the transfer of the stored data are suitable to distribute the ordered stream over a succession of transmission windows allocated to the different acquisition units, and the reception means in the remote station (CS, LS) include a processor (10) suitable to rebuild the continuity of the ordered stream from the data distributed in the successive transmission windows.

14. System as described in claim 13, ***characterised by** the fact that* it includes means in the processing unit (PA) to compress the data prior to their storage in the acquisition units (Ai) and to decompress them prior to their transmission to the remote station (CS, LS).

15. System as described in claim 13, ***characterised by** the fact that* it includes means in the processing unit (PA), to compress the data to be transmitted and the processor (10) in the remote station (CS, LS) is suitable to decompress the received data.

16. System as described in the preceding claim, ***characterised by** the fact that* it includes means in the processing unit (PA) of each acquisition unit (Ai) to apply a lossy or lossless compression algorithm to the data to be transmitted.

17. System as described in one of claims 14 to 16, ***characterised by** the fact that* the processing unit (PA) of each acquisition unit (Ai) includes a signal processor (7) programmed to apply to the seismic data a lossless compression ratio dependent on the data received by the seismic receivers.

18. System as described in one of claims 13 to 17, ***characterised by** the fact that* each storage memory (9) includes a memory of FIFO type for the ordered arrangement of the seismic data and the processing unit (PA) including means for ordered reading of each storage memory (9) at a speed dependant on the transmission means available.

19. System as described in one of claims 13 to 18, ***characterised by** the fact that* the transmission means (3, 4) are radio means or transmission cables.

20. System as described in one of claims 13 to 19, ***characterised by** the fact that* the processing unit (PA) in each acquisition unit (Ai) includes at least one signal processor (7) suitable to apply at least one compression algorithm to the data to be transmitted.

21. System as described in one of claims 13 to 20, ***characterised by** the fact that* the processing unit (PA) in each acquisition unit (Ai) is suitable to apply to the data to be transmitted at least two different compression algorithms and to transfer into each corresponding storage memory (9) seismic data compressed with the algorithm which produces the highest compression ratio.

22. System as described in one of claims 13 to 21, ***characterised by** the fact that* the processing unit (PA) of each acquisition unit (Ai) is suitable to apply preprocessing to the seismic data.

23. System as described in claim 13, ***characterised by** the fact that* the transmission means (3, 4) include a bulk memory displaced to the vicinity of the different acquisition units (Ai) and a short-range connection means (6) to connect the bulk memory in a first stage to each storage memory (9) during at least one arbitrarily selected transmission window, so as to off-load it, and in a second stage to connect the bulk memory to the remote station (CS, LS).
